# EUROPEAN PATENT APPLICATION

(11) **EP 3 812 034 A1**
(43) Date of publication of application: **28.04.2021**
(21) Application number: 19205201.7
(22) Date of filing: 24.10.2019
(51) Int. Cl.: B01D 53/94, B01J 29/76, B01J 35/04, B01J 35/02, B01J 37/02

(54) **DURABLE COPPER-SCR CATALYST**

(71) Applicant: Dinex A/S, 5500 Middelfart (DK)
(72) Inventor: Wollf, Thomas, 5500 Middelfart (DK); Geist, Matthias, Middelfart (DK); Maunula, Teuvo, Middelfart (DK)
(74) Representative: Kjerrumgaard, Lars Bo

(57) **Abstract**

The present invention relates to a catalyst composition for selective catalytic reduction of NOₓ by ammonia or compounds, such as urea, generating ammonia under exhaust gas conditions, the composition comprising
a) a copper ion exchanged zeolite particles having a Si/Al₂ molar ratio (SAR) of 15 or less and a copper content sufficiently high to perform the catalytic reduction,
b) a nanocrystalline aluminium compound in an amount sufficient for stabilizing the zeolite, and
c) a zirconium compound in an amount sufficient to improve hydrothermal durability of the catalyst composition.

## Description

### FIELD OF THE INVENTION

The present invention relates to the field of selective catalytic reduction catalysts of nitrogen oxides and to the methods of preparing and using such catalysts for selective catalytic reduction. Ammonia and precursors like urea forming ammonia are applied as reductants for these catalysts. In particular, the present invention relates to a catalyst composition for selective catalytic reduction of NOₓ by ammonia or compounds generating ammonia under exhaust gas conditions. Furthermore, the invention concerns a support structure for use in an exhaust gas system comprising the present catalyst composition as well as use of the catalyst composition. The present invention furthermore concerns an exhaust gas treatment system comprising the catalyst composition of the present invention. Moreover, the present invention relates to a method for the selective catalytic reduction of NOₓ by ammonia or compounds forming ammonia in exhaust gas conditions.

### BACKGROUND OF THE INVENTION

Nitrogen oxide (NOₓ) emissions have been limited by regulations since early 1970s, first in power plants in Japan and for passenger cars in California USA. Light passenger cars have been based on stoichiometric Otto engines, where it is easy to remove CO, HC and NOₓ on three-way catalysts (TWCs) in stoichiometric conditions. Selective Catalytic Reduction (SCR) for NOₓ removal utilizing ammonia as a reductant was invented in 1960s and commercially applied first in power plant applications. These NH₃-SCR catalysts were based on vanadium as an active metal, which is located on TiO₂-WO₃ based porous support. Vanadium-SCR catalysts stand well sulfur oxides (SOₓ) but the thermal stability is limited to the maximum temperatures of 450 - 600°C. SCR catalysts have been supported on ceramic and metallic substrates or the catalyst material itself forms an extruded SCR catalyst.

The aftertreatment systems (ATS) for latest emission limitation in mobile lean applications include diesel oxidation catalyst (DOC), diesel particulate filter (DPF), urea hydrolysis unit, NOₓ removal unit/method and possibly ammonia slip catalyst (ASC). In addition to NH₃-SCR, other NOₓ removal methods for lean applications are SCR by hydrocarbons (HC-SCR), NO decomposition, lean NOₓ traps (LNT) and absorption/adsorption methods. The methods vary by the target applications and use conditions (lean, lean-rich or stoichiometric). The catalyst compositions are completely different by the conditions in each method. The heavier vehicles have been based for diesel engines, where the air/fuel ratio is clearly lean (excess of oxygen). In lean exhaust gas selective reductants are necessary to remove NOₓ in exhaust gases. Ammonia is the main practical and selective reductant to NOₓ in lean. Usually urea ((NH₂)₂CO) as a water solution has been used as the ammonia source due to transport and safety reasons. Urea is forming ammonia in thermolysis and hydrolysis reactions when the water solution is injected into to warm exhaust gases, possibly with an assistance of static mixer structures. LNTs operate in conditions, which are lean in average and periodic short rich peaks are necessary to reduce NOₓ adsorbed in lean periods. The drawback of LNT is the negative effect on fuel economy, low durability and too low NOₓ conversions for the latest requirements.

Zeolite based SCR with ammonia as a reductant has become more interesting, when the aftertreatment systems require the use of DPF, where particulate (carbon) oxidation and DPF regeneration results in high temperatures up to 700 - 800°C, which are too high for the V-SCR catalysts. In addition to vanadium on TiO₂ and zeolite based, many other SCR catalyst materials have been studied but they have had too low thermal or chemical durability and are not applied in commercial solutions. Zeolites have been applied for SCR already in 1980-1990s based e.g. on ZSM-5, USY and Beta zeolites (e.g. US 4,961,917), focusing on high temperature applications but the first-generation zeolite-SCR catalysts had a drawback of low thermal stability and sulfur tolerance.

Copper-chabazite structure and composition has been found for SCR in 1970 - 1990s. Zeolites having 8-ring pore opening and double 6-ring secondary building units, having cage-like structures have found interesting for SCR. Specific chabazite (CHA) is a small pore zeolite (∼3.8 Å of openings). Zeolites are natural or synthetic crystalline aluminosilicates with a regular porous structure, which varies among different zeolite types. This property can be utilized for producing shape specific catalysts where the molecules that can enter the pores are limited by the shape and size thereof. This is decreasing HC inhibition effects on SCR reactions. The smallest molecules such as NO, NH₃, CO, hydrogen and oxygen are sufficient small to enter into the zeolite pores. The basic structural unit of zeolites, alumina tetrahedron, needs a positively charged monovalent (+1) cation to be electrically neutral. For this reason, cations normally attach to the aluminum site during ion exchange. After the zeolite preparation, the cation present in the zeolite is normally sodium, potassium, ammonium or hydrogen. Silicon tetrahedron is electrically neutral. However, using ion exchange methods, it is easy to exchange them for other cations endowing the zeolites with catalytic properties (Gates et al., Chemistry of Catalytic Processes, McGraw-Hill 1979). In ion exchange, cations like copper (Cu²⁺) are usually adsorbed on zeolites from aqueous solutions, followed by drying and calcinating under suitable conditions. The composition of the basic zeolite structure is commonly described by Si:Al₂ (SAR) molar ratio influencing not only on the zeolite structure but also hydrophobicity/hydrophilicity, acidity and stability under various circumstances, and the amount of the desired cation that can be incorporated into the zeolite by ion exchange. The zeolites used in commercial catalysts are usually synthetic. Pore size and surface properties, varying by zeolite types, are important for the addition of the active components as dissolved compounds by ion exchange or impregnation. The shape, structure and the art of the junctions of the channels can vary between the zeolites. Zeolites can comprise larger (>0.6 nm like Beta and Y) pores and small or medium (≤ 0.6 nm like chabazite, ferrierite and ZSM-5) pores.

Chabazite is a natural mineral, which was applied already in 1950s in catalysis and synthesized already in 1980s (US 4,544,538). Natural or synthetic Cu-chabazite (SAR ≥ 2) was applied for NH₃-SCR in 1970s (US 4,046,888). Cu with chabazite was used together with titania as sulfur tolerant NH₃-SCR catalyst in (US 4,735,927). Cu-chabazite was also included for SCR catalysts in US5589147.

After the early inventions about Cu-CHA for SCR, the later development focused more on details with composition and zeolites. Cu-CHA with SAR > 10 for ammonia-SCR was described (US2003/0069449).

Detailed composition of Cu-CHA with SAR >15 and Cu/Al over 0.25 was defined for SCR (WO2008/106519). Cu-CHA and other active SCR zeolites like AEI and AFX were proposed for SCR by WO2008/118434. Cu on various small pore zeolites (AGO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON) containing a maximum ring size of eight tetrahedral atoms and transition metals (Cr, Mn, Fe, Co, Ce, Ni, Cu, Zn, Ga, Mo, Ru, Rh, Pd, Ag, In, Sn, Re, Ir and Pt) have described in WO2008132452. Differences between natural and synthetic CHA have been discussed also as a variable. Due to the description of wide matrix for zeolite and active metal types, it was often not defined the detailed combination or additives resulting in the highest activity and durability in the complete SCR catalyst.

Cu-CHA with lower SAR (5 - 15) was proposed for the use in SCR (WO2011/073390, US 2013/0280160, US2012/0269719). SAPO-34 composing aluminum phosphates has the same structure than chabazite and has been also widely studied for Cu-SCR. AEI (WO2014/141200), AFX and LEV with copper are other microporous zeolites applied for SCR.

Extra-framework aluminum (Al) in zeolites was defined and minimized (<15%) for Cu on CHA and similar zeolites (WO2019049069). Usually it has been described in zeolite-SCR concepts that Cu-zeolite (CHA, AEI, AFX, etc.) itself forms the main SCR functionality with any kinds of binders (alumina, silica, titania, ceria, zirconia), which role is to improve the adhesion on structured substrates. However, the other materials, in addition to zeolites and conventional binders, can have a crucial role in the final SCR functionality and thermal durability.

Therefore, the base composition of Cu-CHA catalyst for ammonia/urea-SCR have been known since 1970s - 1990s but the detailed, slightly varying new compositions have been developed with improved properties after year 2000. Many conventional, hydrothermally stable Cu-CHA catalysts are based on high SAR (>15-20), resulting in a low copper loading, if the ion exchange ratio (IER) of Cu/Al is kept on a reasonable level (<0.5). The copper loading (grams) has a direct connection to total number of active sites and catalyst activity. If the copper concentration is made higher on high-SAR Cu-CHA, it is a risk for the excessive high ammonia oxidation activity at elevated temperatures. This is harmful causing additional reductant (urea) consumption, which can be understood directly as equivalent increase in fuel consumption (high CO₂). High Cu/Al with a high SAR causes also a risk that copper is located partly outside zeolite structure (non-intercalated Cu compounds) which promote the ammonia oxidation at high temperatures.

### SUMMARY OF THE INVENTION

The present invention solves many of the problems with the prior art and in particular a copper exchanged zeolite catalyst composition has been invented comprising small pore Cu-zeolite such as Cu-CHA, and promoters improving the catalyst activity and durability.

The present invention provides a SCR catalyst comprising a zeolite (for example CHA, AEI, AFX, LEV, Beta or mixtures thereof) with copper as the active metal and a nanocrystalline aluminium compound (Al-compound) as fine dispersed particles, including crystals. The catalyst composition of the present invention is applied for NOₓ abatement with ammonia, urea and other selective reductants in mobile and stationary lean applications. A nanocrystalline Al-compound, such as small Al₂O₃ crystals and particles, improve the hydrothermal (HT) and mechanical stability of the coating layer in SCR catalyst compositions, which are applied preferably for flow-through substrates but can be also for particulate filters. The addition of small size Al₂O₃ crystals in vicinity to the zeolite surface creates a surface interaction between the two compounds. The dealumination rate from zeolite is by this way hindered. This is an important feature with low-SAR zeolites (SAR below 15), which pure zeolites or zeolites with conventional binders suffer from lower HT durability in comparison to CHA with a SAR in the range of 20 - 30. Low-SAR CHA has a property to reach higher Cu loading in ion exchange, which enables to have a higher amount of active Cu sites for SCR without excessively high ammonia oxidation activity. The present invention provides a catalytic composition, which contains a zeolite with a higher copper (Cu) loading by weight, lower SAR but also a low ammonia oxidation activity.

Zirconium (Zr) compound is dispersed near to Cu exchanged zeolite particles and nanocrystalline Al-compound to improve the hydrothermal durability in exhaust gas conditions. Zirconium compounds (oxides, sulfates, hydroxides) play a role to support SCR catalyst acidic properties.

To further improve hydrothermal durability one or more additives, chosen from the group La, Y, Hf and Nb, are dispersed as small particles to improve the hydrothermal durability. These additives enhance the low temperature SCR activity.

The ionic radius of the added compounds (nanocrystalline Al-compound, Zr-compound, the one or more additives) was also selected and defined in relation to copper, to improve the stability without disturbing copper as the active site inside zeolite pores.

Large particles (LP) are further added to improve the hydrothermal stability of zeolite-based SCR catalysts and the mechanical durability of coating layer. These particles act as large local thermal barriers and heat capacity to protect the high temperature and sintering to proceed through zeolite particles.

To further stabilize the catalyst composition, Si or Ti are added, preferably as part of the large particles (LP). Si and Ti are present as oxide forms like SiO₂ and TiO₂ or as mixed oxides (SiOₓ, TiOₓ) with aluminium oxide.

The present SCR catalyst has a microporous structure formed by Cu-zeolite particles with SAR of < 15, a nanocrystalline Al-compound stabilizing Cu-CHA, e.g. by suppressing dealumination, dispersed zirconium as a hydrothermal stabilizer, an additive for the enhancement of thermal stability and a large particle with a high local heat capacity acting as a thermal barrier between zeolite particles.

In a broad aspect the present invention relates to a catalyst composition for selective catalytic reduction of NOₓ by ammonia or compounds, such as urea, generating ammonia under exhaust gas conditions, the composition comprising
a) a copper ion exchanged zeolite particles having a Si/Al₂ molar ratio (SAR) of 15 or less and a copper content sufficiently high to perform the catalytic reduction,
b) a nanocrystalline aluminium compound in an amount sufficient for stabilizing the zeolite by reducing the dealumination rate from the zeolite, and
c) a zirconium compound in an amount sufficient to improve hydrothermal durability of the catalyst composition.

In an embodiment the zeolite is selected from a framework group consisting of chabazite (CHA), AEI, AFX, LEV, Beta or mixtures thereof. Preferably CHA.

In a further embodiment the copper ion exchanged zeolite particles has a SAR from 2 - 14.9. Preferably a SAR from 5 - 14.9. A SAR above 5 is preferred to improve the base zeolite stability and to keep Cu/Al ratio on a reasonable level.

In a still further embodiment the copper ion content, measured as CuO, in the zeolite is from 1-10 wt%, such as 2-7 wt%, preferably 4-5 wt%, based on the total zeolite weight.

In a further embodiment the molar ratio of Cu/Al in the zeolite is from 0.02 to 0.4, preferable from 0.05 to 0.25.

The molar Cu/Al in zeolite is in the range of 0.02- 0.4, preferable in the range of 0.05 - 0.25 to have a hydrothermally stable Cu-zeolite catalyst with a low ammonia oxidation rate. The high NOx performance is reached with lower molar Cu/Al ratio than typical Cu/Al ratio with Cu-CHA having high SAR like >15-20.

In a still further embodiment, the total copper ion content measured as CuO in the catalyst composition is from 2-6 wt% based on total weight of the catalyst composition.

In a still further embodiment, the copper ion exchanged zeolite particles comprise a size as d₅₀ from 1-10 micron, such as from 2-5 micron.

In a still further embodiment, the amount of zirconium compound in the catalyst composition is from 1 to 10 wt% as ZrO₂ based on total weight of the catalyst composition. Typically, the amount of zirconium compound as ZrO₂ in the catalyst composition is from 2-7 wt% based on total weight of the catalyst composition.

This ZrO₂ amount is selected to stabilize other compounds having dispersed Zr on other, porous catalyst compounds.

In a further embodiment the nanocrystal aluminium compound comprises aluminium oxides. Typically, the nanocrystalline Al-compound is Al₂O₃.

In a still further embodiment, the nanocrystalline Al₂O₃ comprises a crystalline size as d₅₀ from 1 - 8 nm, such as 3 - 7 nm.

In a further embodiment the nanocrystalline Al₂O₃ comprises a dispersed particle size as d₅₀ from 5-80 nm, such as 10-65 nm.

In a still further embodiment, the catalyst composition of the present invention comprises large particles (LP), such as Al₂O₃ based large particles, comprising a particle size by d₅₀ from 3 - 200 micron, preferably from 5 - 40 micron.

In particular the large particle is Al₂O₃ based. Preferably the large particle consists of Al₂O₃.

In a still further embodiment, the catalyst composition of the present invention further comprising an additive selected from oxides of La, Y, Hf, Nd, and mixtures thereof.

In a further embodiment the catalyst composition of the present invention comprises Si, Ti or mixtures thereof. Preferably, Si and Ti is attached to and embedded in the large particles (LP).

In a still further embodiment the catalyst composition of the present invention having a total SAR (TSAR) of less than 10, wherein TSAR is defined as the molar Si/Al₂ ratio between Si in the copper ion exchanged zeolite and total Al₂ in the copper ion exchanged zeolite and the nanocrystalline aluminium compound. Typically, the TSAR is from 4 - 10. Preferably the TSAR is from 4 -8, e.g. 5 -7.

In a further aspect the present invention relates to a support structure for use in an exhaust gas system comprising a catalyst composition of any one of the above aspects and/or any one of the above embodiments. Typically, the structure is selected from a ceramic or metallic flow-through and wall-flow substrate, preferably a flow-through substrate.

In a still further aspect the present invention relates to use of a catalyst composition of any one of the above aspects and/or any one of the above embodiments for selective catalytic reduction of NOₓ by ammonia or compounds generating ammonia under exhaust gas conditions.

In a further aspect the present invention relates to an exhaust gas treatment system comprising a catalyst composition of any one of the above aspects and/or any one of the above embodiments for selective catalytic reduction of NOₓ by ammonia or compounds, such as urea, generating ammonia under exhaust gas conditions coated on a support structure.

In a still further aspect the present invention relates to a method for the selective catalytic reduction of NOₓ by ammonia or compounds forming ammonia in exhaust gas conditions, the method comprising applying the catalyst composition of any one of the above aspects and/or any one of the above embodiments on a support structure.

In a further aspect the present invention relates to a catalyst composition for selective catalytic reduction of NOₓ by ammonia or compound generating ammonia under exhaust gas conditions, catalyst composition for selective catalytic reduction of NOₓ by ammonia or compounds generating ammonia under exhaust gas conditions, of any one of the above aspects and/or any one of the above embodiments obtainable by drying and calcining an aqueous catalyst composition comprising a) a copper ion exchanged zeolite particle having a Si/Al₂ molar ratio (SAR) of 15 or less and a copper ion content sufficiently high to perform the catalytic reduction, b) a nanocrystalline aluminium compound in an amount sufficient for stabilizing the zeolite by reducing the dealumination rate from the zeolite, and c) a zirconium compound in an amount sufficient to improve hydrothermal durability of the catalyst composition; at a temperature form 400-700 °C in the presence of oxygen, such as air.

In a still further aspect the present invention relates to an aqueous catalyst composition suitable for use as a catalytic coating on a support structure in selective catalytic reduction of NOₓ by ammonia or compounds generating ammonia during a catalytic reduction, the composition comprising
a) a copper ion exchanged zeolite particle having a Si/Al₂ molar ratio (SAR) of 15 or less and a copper ion content sufficiently high to perform the catalytic reduction in the coating,
b) a nanocrystalline aluminium compound in an amount sufficient for stabilizing the zeolite in the coating by reducing the dealumination rate from the zeolite, and
c) a zirconium compound in an amount sufficient to improve hydrothermal durability of the catalyst coating.

In a further embodiment the zirconium compound is selected from a precursor of zirconium compound, such as zirconium oxides, zirconium sulphoxides, zirconium sulphates, zirconium nitrates, zirconium acetates, zirconium hydroxides and mixtures hereof.

In a still further embodiment the nanocrystalline aluminium compound is modified to have an acidic surface during preparation, where pH is in wet (slurry) conditions typically less than 5, such as 3. The modification may take place during preparation with HNO₃ before calcination.

Further objects and advantages of the present invention will appear from the following description, and claims.

### BRIEF DESCRIPTION OF DRAWINGS

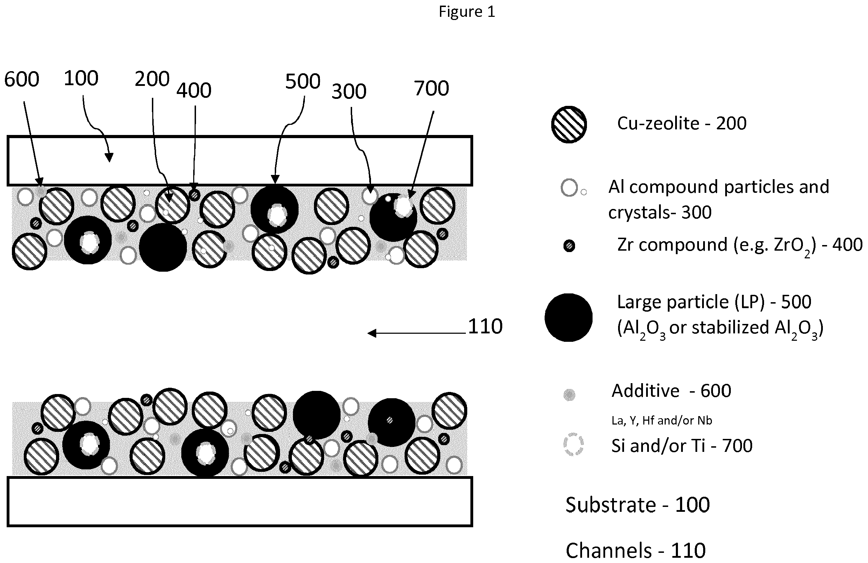

Figure 1 illustrates schematically the copper SCR catalyst composition on a substrate according to this invention. The catalyst consists of a substrate (100) which forms open flow channels (110) for exhaust gas and on its substrate walls the catalyst coating is located. The coating is formed by the mixture of Cu-zeolite (200, e.g. Cu-CHA), Al compound (300), ZrO₂ (400), additive (Add, 600) and large particles (LP, 500) and Ti and/or Si (700).

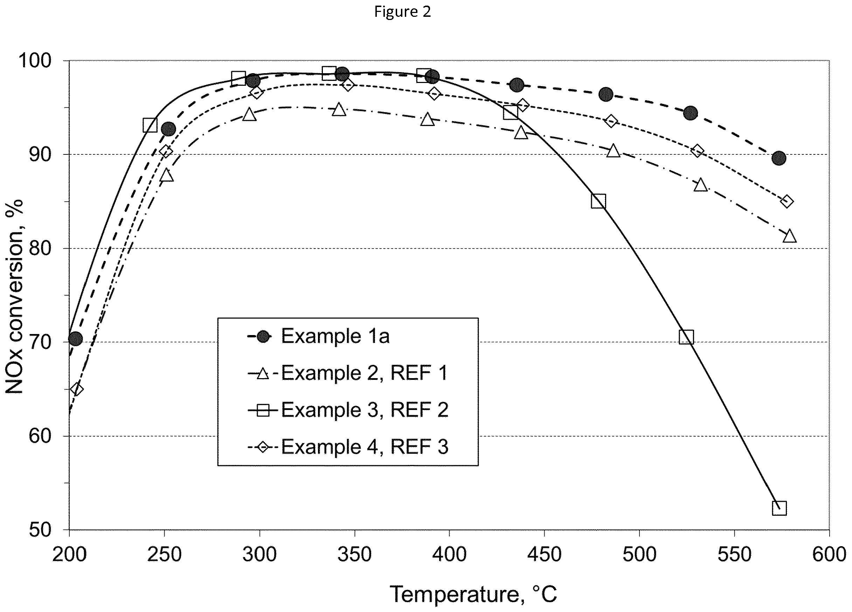

Figure 2 shows a diagram with the NOx conversion as tested in a synthetic gas bench with 40% NO₂ and 60% NO (both in respect to total NOx) in the feed gas at a SV of 71.000 h⁻¹ for the example 1a, 2 (REF 1), 3 (REF 2) and 4 (REF 3). All the samples have been hydrothermally been aged at 800°C for 20 hours. The comparison shows the influence of the Al-compound with a small crystalline size (example 1a) in respect to an Al-compound with larger Al₂O₃ crystalline sizes (example 2, REF 1) and a comparison with a reference state-of-art Cu-CHA catalyst (example 3, REF 2) and a second reference sample prepared according to example 1a but with a zeolite with a SAR of 23 (example 4, REF 3).

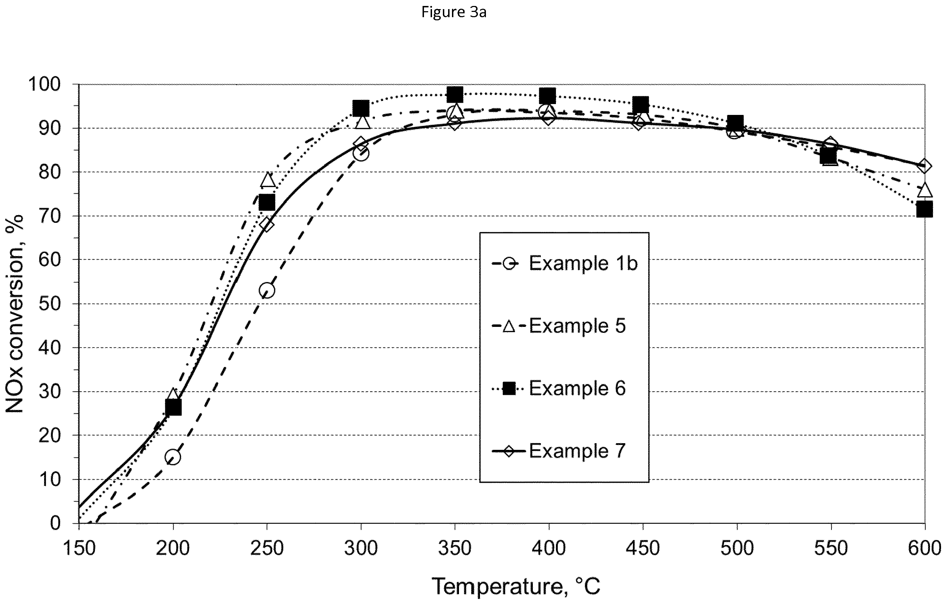

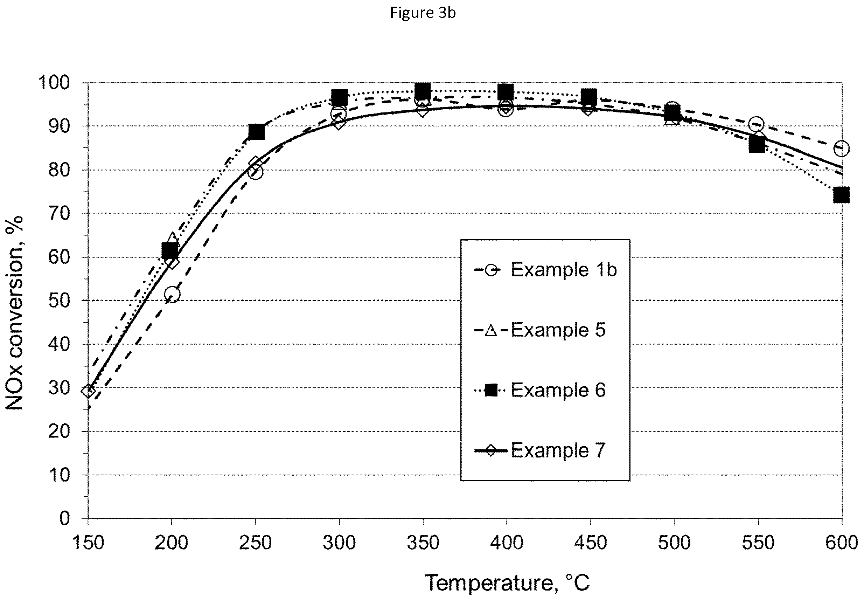

Figure 3 illustrates in two diagrams the improvement of the thermal ageing stability of a Cu-CHA with a SAR of 11 in combination with Al-1 either by adding a zirconium compound or Lanthanum oxide as an additive or both. The diagram in Figure 3a shows the NOx conversion as tested in a synthetic gas bench with NO only in the feed gas at a SV of 50.000 h⁻¹ for example 1b (Cu-CHA with SAR of 11 with Al-1), example 5 (Cu-CHA with SAR of 11 with Al-1 and 6% ZrO₂ as thermal stabilizer), example 6 (Cu-CHA with SAR of 11 with Al-1 and 3% La₂O₃ as thermal stabilizer), and example 7 (Cu-CHA with SAR of 11 with Al-1 and 3% ZrO₂ plus 3% La₂O₃ as thermal stabilizers). All samples have been hydrothermally aged at 850°C for 20 hours. Figure 3b shows in a diagram the NOx conversion for the same set of samples as tested in a synthetic gas bench with 40% NO₂ and 60% NO (both in respect to total NOx) in the feed gas at a SV of 50.000 h⁻¹

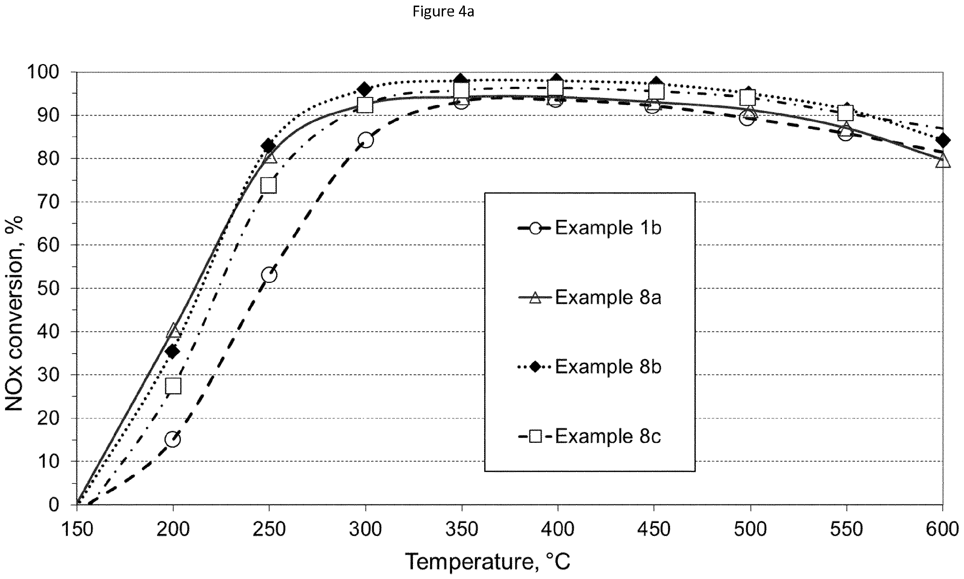

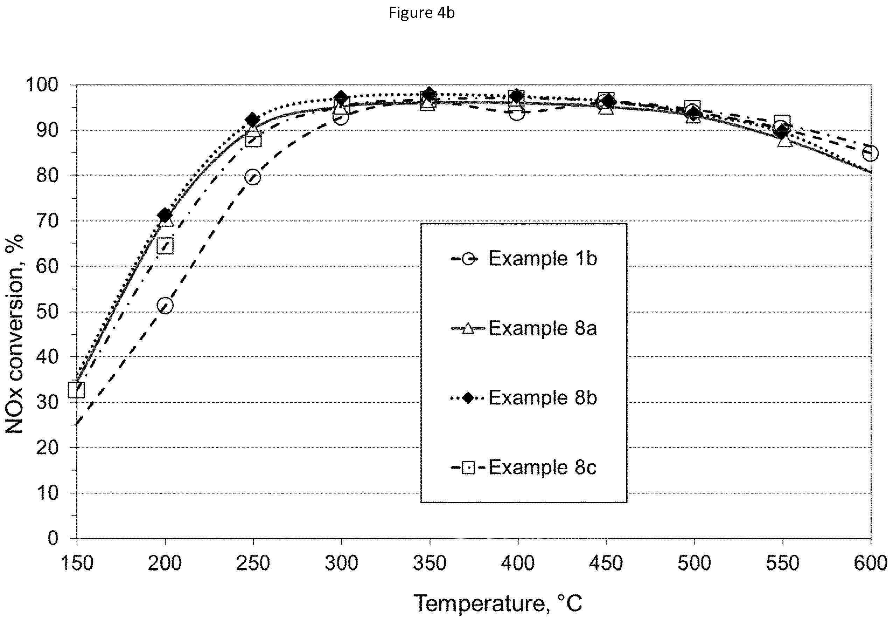

Figure 4 illustrates in two diagrams the improvement of the thermal ageing stability of a Cu-CHA with a SAR of 11 in combination with Al-1 and the addition of Large Particles (LP). The diagram in Figure 4a shows the NOx conversion as tested in a synthetic gas bench with NO only in the feed gas at a SV of 50.000 h⁻¹ for example 1b (Cu-CHA with SAR of 11 with Al-1, total loading 140g/l), example 8a (Cu-CHA with SAR of 11 with Al-1 at 140g/l and Large Particles comprising Al₂O₃ as the main oxide and 3% of La₂O₃ at 40g/l), example 8b (Cu-CHA with SAR of 11 with Al-1 at 140g/l and Large Particles comprising Al₂O₃ as the main oxide and 20% of SiO₂ at 40g/l), and example 8c (Cu-CHA with SAR of 11 with Al-1 at 140g/l and Large Particles comprising Al₂O₃ as the main oxide and 15% of ZrO₂ and 20% of SiO₂ at 40g/l). All samples have been hydrothermally aged at 850°C for 20 hours.
Figure 4b shows in a diagram the NOx conversion for the same set of samples as tested in a synthetic gas bench with 40% NO₂ and 60% NO (both in respect to total NOx) in the feed gas at a SV of 50.000 h⁻¹.

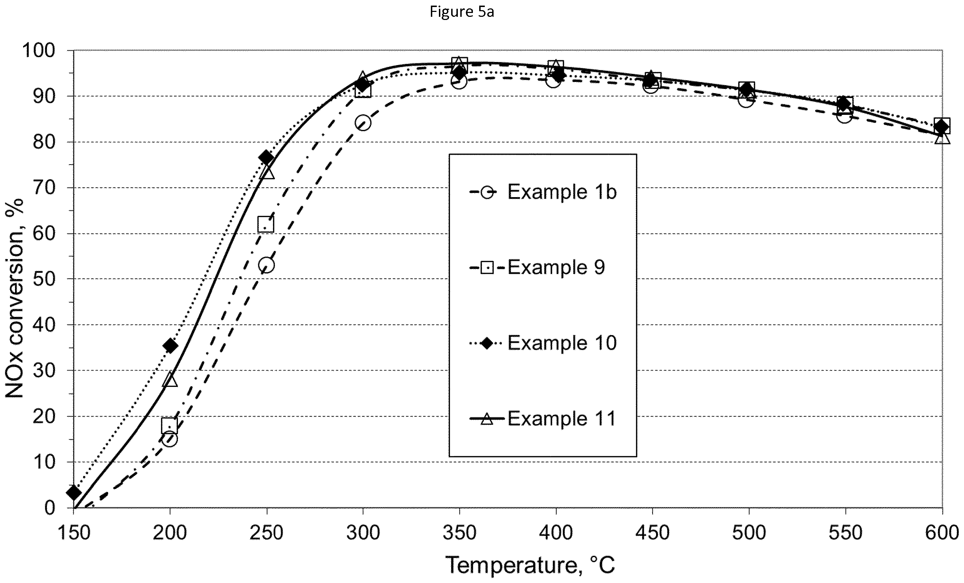

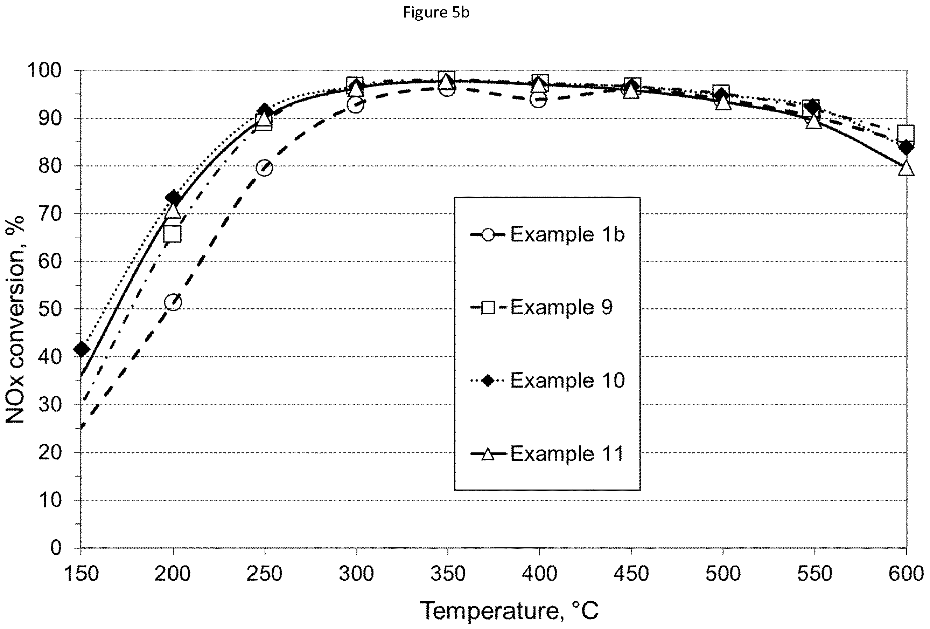

Figure 5 illustrates in two diagrams the improvement of the thermal ageing stability of a Cu-CHA with a SAR of 11 in combination with Al-3 and the addition of a zirconium compound and / or Lanthanum oxide as an additive and the addition of Large Particles (LP). The diagram in Figure 5a shows the NOx conversion as tested in a synthetic gas bench with NO only in the feed gas at a SV of 50.000 h⁻¹ for example 1b (Cu-CHA with SAR of 11 with Al-1, total loading 140g/l), example 9 (Cu-CHA with SAR of 11 with Al-3 and 6% ZrO₂ as thermal stabilizer at 140g/l and Large Particles comprising Al₂O₃ as the main oxide and 3% of La₂O₃ at 40g/l), example 10 (Cu-CHA with SAR of 11 with Al-3 and 6% ZrO₂ as thermal stabilizer at 140g/l and Large Particles comprising Al₂O₃ as the main oxide and 20% of SiO₂ and 20% of TiO₂ at 40g/l), and example 11 (Cu-CHA with SAR of 11 with Al-3 and 3% ZrO₂ plus 3% La₂O₃ as thermal stabilizers at 140g/l and Large Particles comprising Al₂O₃ as the main oxide and 20% of SiO₂ and 20% of TiO₂ at 40g/l). All samples have been hydrothermally aged at 850°C for 20 hours.
Figure 5b shows in a diagram the NOx conversion for the same set of samples as tested in a synthetic gas bench with 40% NO₂ and 60% NO (both in respect to total NOx) in the feed gas at a SV of 50.000 h⁻¹.

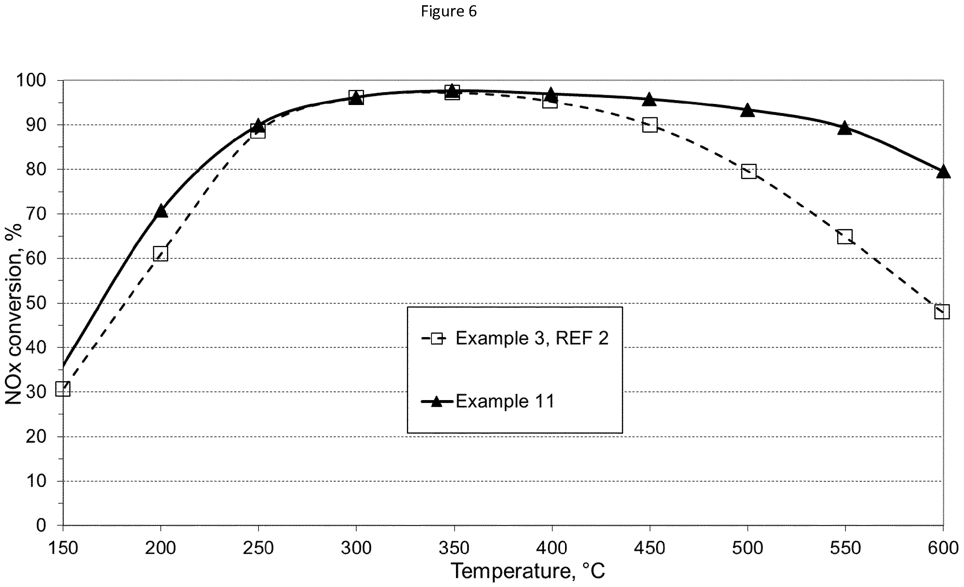

Figure 6 illustrates in a diagram the improvement of the thermal ageing stability of a Cu-CHA with a SAR of 11 in combination with an Al compound utilizing all possible additives according to this invention. The diagram shows the comparison of the NOx conversion as tested in a synthetic gas bench with 40% NO₂ and 60% NO (both in respect to total NOx) in the feed gas at a SV of 50.000 h⁻¹ for example 3, which is a reference state-of-art Cu-CHA catalyst with high SAR and a high low temperature DeNOx activity, with example 11, which represents a fully developed Cu-zeolite SCR catalyst composition according to this invention consisting of a Cu-CHA with SAR of 11 with Al-compounds Al-3 and 3% ZrO₂ plus 3% La₂O₃ as thermal stabilizers at 140g/l and Large Particles comprising Al₂O₃ as the main oxide and 20% of SiO₂ and 20% of TiO₂ at 40g/l. Both samples have been hydrothermally aged at 850°C for 20 hours.

### DESCRIPTION OF THE INVENTION

There are many advantages of the present invention in a broad context as well as further even more advantages aspects of the embodiments.

The SCR catalyst is composed of the defined materials according to the above aspects and/or embodiments of the present invention, which catalyst composition is coated on a carrier structure, such as a ceramic or metallic substrate or particulate filter (carrier). The total coating amount is varied in the range of 20 - 400 g/L depending on application or carrier type (cell density, ceramic/metallic, flow-through/wall-flow). In a preferred embodiment the total coating amount is in the range of 60 - 200 g/L.

The term "copper ion exchanged zeolite" is used interchangeably with "Cu-zeolite", and for instance "Cu-CHA" means "copper ion exchanged chabazite".

The SCR catalyst composition of the present invention is an active microporous zeolite. Cu exchanged zeolite is preferably in the CHA (chabazite) form with a SAR in the range of 2 - 14.9, preferably in the range of 5 - 14.9. The copper loading is measured as CuO typically in the range of 2 - 7 wt-%, preferably in the range of 4 - 5 wt-% in zeolite and about 2 - 6 wt-% in the catalyst including all the catalyst compounds. The surface area of the copper ion exchanged zeolite, preferably Cu-CHA, is in the range of 450 - 700 m²/g as fresh (calcined at 550°C/3h, before aging). Preferably, the mean particle size (d₅₀) of Cu-zeolite (such as Cu-CHA) is about 2 - 5 µm in the catalyst coating.

An important element of the catalyst composition of the present invention is the nanocrystalline Al compound (Al-compound). It is known that SAR has been a variable in zeolite compositions. It has been seen that free Al can exist in zeolites so that not all Al is in the framework (so called non-framework Al). Usually in the known technology it has been a target to minimize non-framework Al in zeolite to prevent possible negative effects like dealumination. However, when Al is applied as nanocrystalljne Al-compound to the zeolite-based catalyst of the present invention, it is created in purpose a lot of Al₂O₃ crystals/particles which have very close contact to zeolite structure, preventing dealumination and stabilizing the Al in zeolite framework. The use of an Al-compound with very small crystal size (as Al₂O₃) in the catalyst composition of the present invention has shown to improve the activity, stability, adhesion and cohesion of the catalyst. For these reasons different Al₂O₃ precursors can be used in the washcoat. The Al₂O₃ source can be a dispersion of Al₂O₃ itself, a sol of boehmite or other precursor or even a solved aluminium salt as Al(NO₃)₃. Combinations of the mentioned sources are also possible.

Three different types Al compound candidates were examined in the examples. Al-1, Al-2 (REF 1) and Al-3 were studied as Al compounds in the experiments. Al-1 has a dispersed particle size in water media 20 nm, crystalline size 4.5 nm and initial BET surface area of 260 m²/g as calcined at 550°C/3h. Al-2 has these parameters of 90 nm, 9 nm and 200 m²/g. Al-3 has the parameters of 60 nm, 6 nm and 230 m²/g. These small crystalline and particle size of Al compound were seen to promote the activity. The small dispersed particle size is also a key variable to keep the Al-compound amount as low together with improved adhesion and cohesion on substrate walls. Higher relative weight amount is needed to reach the same coating layer strength with larger Al-compound or Al binder particles. In addition, a small amount of nitrate can be present in aqua coating media (slurry) or on the Al-compound precursor, which is important for the formation of small Al₂O₃ crystal in chemical and mechanical dispersing process. These surface nitrates are decomposed in final heat treatments leaving ready nanoscale Al₂O₃ particles in the catalyst structure. The ready Al₂O₃ surface has still acidity on oxide and hydroxyl groups after calcination in dry conditions.

The particle size of Al-compound (Al₂O₃) as dispersed in water is in the range of 5 - 80 nm, preferably in the range of 10 - 65 nm and crystalline size is in the range of 1 - 8 nm, preferably in the range of 3 - 7 nm. BET surface area is above 200 m²/g as calcined at 550°C/3h.

Due to the role of nanocrystalline Al-compound, the standard SAR of zeolite is not the only meaningful variable in these zeolite-based Cu-SCR catalysts. Very small aluminium oxide particles have an effect on the stability and dealumination of aluminum-silicate based zeolite catalysts. The nanocrystalline Al₂O₃ present in a close contact to zeolite particles, pores and cages may change the equilibrium of Al compounds (Al in zeolite and Al as Al-compound), which prevent Al diffusion out from zeolite structure (dealumination). Even if a small amount of Cu is present as non-capsulated form (free-Cu) after heavy hydrothermal ageing, Al-compound is a potential stable scavenger for these free Cu/CuO compounds, which oxidation state (Cu, Cu⁺, Cu²⁺) can be varied by conditions. At high temperatures, Cu on nano-size Al₂O₃ is more stable than Cu on Si-rich silicate (zeolite) surface. In addition, Cu/Al₂O₃ is also quite good SCR catalyst and thus the total SCR functionality of Cu-CHA catalyst is not change too much, if Cu/Al₂O₃ exists and the total free-Cu amount stays low.

Therefore, the Total SAR (TSAR) was defined, which is calculated as a molar ratio between zeolite Si and Al₂ in zeolite + Al₂ in Al-compound. The possible larger Al₂O₃ particles in binder or LP are excluded in this calculated value, because they have not the same positive interaction and contact with Cu-zeolite and other compounds in composition. TSAR values varied in the range of 5 - 10 in the studies samples (Table 1). Preferably, TSAR is in the range of 4 - 8, and even more strictly defined in the range of 5 - 7. As a combination of these two SAR values, SAR is defined to be as a maximum value of 14.9 and TSAR as a maximum value of 8, which values are reached by the zeolite SAR value and Al-compound amount in the SCR catalyst.

The binder has not completely an inert role for the catalyst activity and durability and the SCR activity is not solely depending on defined zeolite properties. Pure zeolite cannot be tightly bound on substrate walls and some types of binders or additives can decrease the catalytic activity of Cu-zeolite. Therefore, it is important to apply Al-compounds to replace conventional binders.

A description of zirconium and the additive for enhanced thermal durability: Further the addition of Zr and/or additive (La, Y, Hf, Nb) oxides or dispersed compounds improved the thermal stability. These compounds are added as water soluble or insoluble precursors. The amount of Zr and additive can be varied in the range of 0.1 - 30 wt-% as stable oxides (e.g. ZrO₂, La₂O₃) of ready calcined coating, preferably in the range of 1 - 10 wt-%. The Zr together with the additive, such as La is also applied to create combinatory promotion effects. For instance, Zr and La are spread evenly on the zeolite surface, zeolite pores, on Al-compound surface or on additional binder materials.

The ionic size of elements has a crucial role for interactions. The channel size of zeolite pores is size- and shape-limited and small differences in ionic diameter or radius are meaningful, where the metal ions have an access. The pore opening and ionic sizes of planned elements looked to be near in the same range. CHA has 3.8 Å of openings in pore structure. The ionic radius of Cu²⁺ is 0.69 Å (Sargent-Welch Scientific Company: Table of periodic properties of the elements, 1968). Therefore, the access of Cu cations to Al sites is partly structure limited in tortuous zeolite channels. La³⁺ has ionic radius 1.15 Å, Zr⁴⁺ 0.80 Å, Y³⁺ 0.93 Å and Hf⁴⁺ 0.81 Å. Therefore, the defined additive has the larger ionic radius than Cu²⁺ ion exchanged in zeolite cages. This is a defined property of the additive according to the invention. Other base metals like Ti⁴⁺ (0.68 Å), Si⁴⁺ (0.41 Å), V, Cr, Mn, Fe. Cr, Co, Ni have as their stable states a smaller ion radius than Cu²⁺ and they were not applied as additives, because they could due to the small size cause also negative effects by competing with Cu about zeolitic sites. Al³⁺ has ionic radius of 0.50 Å, which is smaller than with Cu^{2+.} Therefore, the additive has a larger ionic radius than both Cu²⁺ and Al³⁺ in Al-compound. A larger radius slows down or prevents the access of these ions to the same zeolitic sites where Cu (or Al) are located. It is a target to promote and stabilize the zeolite catalyst but not disturb the state and functionality of Cu sites inside zeolite structured catalyst.

Description of the large particles (LP): The separate LP particles with promoters act as thermal barriers, which prevent the propagation of thermal sintering from a zeolite particle to another zeolite particle. These large particles have a high local heat capacity and can act as a thermal heat sink representing a thermal barrier to protect the zeolite particles active in SCR. Mechanically strong LP particles improve the coating layer strength and improve the pore diffusion through a thick catalyst layer, because large particles leave more open passages between particles than a structure composing only small particles.

Preferably, the chemical composition of LP is aluminum oxide with additional promoters like Si or Ti as stable oxides or mixed oxides. The mean particle size (d₅₀) of LP, thermal barrier, particles is defined to be about 3 - 200 µm, preferably in the range of 5 - 40 µm to fit them in common coating layers. Therefore, their mean particle size is larger than zeolite and significantly larger than Al-compound or additives. The particle size (d₅₀) of LP is larger than for the zeolite (e.g. about 2 - 5 µm for zeolite and about 5 - 40 µm for LP). Thus, the LP particles will mechanically strengthen the coating layer. The amount of LP can be varied in the range of 0.5 - 50 wt-% of total coating amount, preferably in the range of 2 - 25 wt-%. As the coating amounts are given in g/L this means: an amount of LP of 40 g/L in the total coating amount of 180 g/L equates 22.2 wt-%, 20 g/L in 180 g/L equate 11.1 wt-%, 10 g/L in 140 g/L equate 7.1 wt-%. The studied examples had quite high amount of LP to see better variable effects, but the defined amount can be better applied in the lower range, focusing on thermal and cohesion stabilization with a smaller decrease in the total Cu-zeolite amount. The mean pore sizes (d₅₀ or d₉₀) are larger for LP than for Cu-zeolite particles.

Then BET surface area of LP is about 100 - 300 m²/g, when BET surface area of Cu-zeolite is over 450 m²/g as fresh state (calcined at 550°C/3h). It is a risk that pure Cu-zeolite with SAR <15 will lose BET surface area down to below 100 m²/g at 900 - 1000°C in air. LP is able to keep a high BET surface area: >200 m²/g after air ageing at 900°C and >150 m²/g after air ageing at 1000°C for 3 hours. Therefore, these stable, separate LP particles on catalyst composition have a stabilizing effect on zeolite particles. These particles can be added in ready aqua (slurry) media, which is further milled, or they are added after milling keeping the original particle size and a larger difference by the d₅₀ particle size between zeolite and LP particles in final coating. A dilution of the catalyst composition with thermal barrier particles decreases and dilutes the thermal stress on zeolite particles in the coating layer. It is also possible to add LP only on bottom or top catalyst layers in double-layer coatings, to improve the mechanical strength or gas pore diffusion in coating layers.

LP can be further stabilized with different Si, Ti, Zr and/or additive oxides as SiO₂, TiO₂, La₂O₃ or ZrO₂. Si, Ti and Zr oxides increase the acidity of LP and prevent the catalyst from sulfation effects on alumina-based structures. The metal oxides are usually added during the Al₂O₃ preparation process itself but can also added later in the process. For this invention both procedures can be used. The added metal oxides can form a mixed oxide or mixture of oxides with Al₂O₃, resulting in very stable LP structure, tailored pore size distribution and a good stability of e.g. Si and/or Ti oxides in the structure. The metal oxides play also a role stabilizing the wide pore size structure of LP, which has a positive effect on pore diffusion and thermal stability.

Zr and additives can be added during the catalyst preparation as nitrates, acetates or other watersoluble compounds optionally with acid assistances (nitric or organic acids). The zirconium compound is prepared from the precursors like zirconium oxides, zirconium sulphates, zirconium nitrates, zirconium acetates and zirconium hydroxides, such as ZrO₂, Zr(OH)₄, Zr(OH)₂.CO₃.ZrO₂, Zr(SO₄)₂, zirconia basic carbonate Zr(OH)_{2*}CO_{3*}ZrO₂, Zirconium acetate Zr(acetate)₂ or Zirconium nitrate Zr(NO₃)₄.

Zr, Ti and Si are inert in presence of SOₓ, which keeps the sulfation tendency low. Additives La and Y have a higher tendency to form stable sulphates, but they are so stable that are not decomposing or moving in normal exhaust conditions.

The invented catalyst composition can be coated on ceramic (e.g. cordierite, Al titanate or mullite) or oxidation resistant metallic substrates forming flow-through structure. The same composition can be applied also into particulate filter structures (SiC, cordierite, metallic) with a modified viscosity and solid content in slurry conditions.

The SCR catalyst composition by the invention can be applied as a SCR unit in ATSs composing DOC, DPF, hydrolysis, SCR and ASC units. The SCR unit can locate before or after DOC+DPF units. This catalyst composition can be integrated also to ASC composition, which is formed by noble metal (e.g. Pt) containing catalyst together with the SCR catalyst by the invention. In the ASC, Pt and SCR catalysts are located in the same zone axially in exhaust gas flow direction to reach a high ASC functionality and selectivity. The catalyst composition by the invention can be also present in the hydrolysis unit, e.g. mixer structures before the SCR unit.

All references, including publications, patent applications and patents, cited herein are hereby incorporated by reference to the same extent as if each reference was individually and specifically indicated to be incorporated by reference and was set forth in its entirety herein.

All headings and sub-headings are used herein for convenience only and should not be construed as limiting the invention in any way.

Any combination of the above-described elements in all possible variations thereof is encompassed by the invention unless otherwise indicated herein or otherwise clearly contradicted by context.

Recitation of ranges of values herein are merely intended to serve as a short method of referring individually to each separate value falling within the range, unless otherwise indicated herein, and each separate value is incorporated into the specification as if it were individually recited herein. Unless otherwise stated, all exact values provided herein are representative of corresponding approximate values (e.g., all exact exemplary values provided with respect to a particular factor or measurement can be considered to also provide a corresponding approximate measurement, modified by "about", where appropriate).

All methods described herein can be performed in any suitable order unless otherwise indicated herein or otherwise clearly contradicted by context.

The terms "a" and "an" and "the" and similar referents as used in the context of de-scribing the invention are to be construed to insert both the singular and the plural, unless otherwise indicated herein or clearly contradicted by context. Thus, "a" and "an" and "the" may mean at least one, or one or more.

The term "and/or" as used herein is intended to mean both alternatives as well as each of the alternatives individually. For instance, expression "xxx and/or yyy" means "the xxx and yyy; the xxx; or the yyy", all three alternatives are subject to individual embodiments.

The use of any and all examples, or exemplary language (e.g., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation and incorporation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of', "consists essentially of', or "substantially comprises" that particular element or elements, unless otherwise stated or clearly contradicted by context (*e.g.,* a composition described herein as comprising a particular element should be understood as also describing a composition consisting of that element, unless otherwise stated or clearly contradicted by context).

This invention includes all modifications and equivalents of the subject matter re-cited in the aspects or claims presented herein to the maximum extent permitted by applicable law.

The features disclosed in the foregoing description may, both separately and in any combination thereof, be material for realizing the invention in diverse forms thereof.

### EXPERIMENTAL

### General preparation description:

Cu-SCR catalysts were coated by applying a slurry on cordierite substrates with different geometries. The slurry consists of the different materials stated in this invention. A person skilled in the art in this field is able to choose the necessary size, porosity, cell density and other relevant substrate properties by general catalyst design principles. Except for comparison studies copper exchanged synthetic zeolite has been used. The zeolite has a CHA framework, which is defined by its molar Si/Al₂ ratio (SAR). Copper has been added to the CHA (SSZ-13 known as synthetic CHA) framework by wet ion exchange methods. The Cu concentrations is about 3 - 5 wt-% in examples. The molar Cu/Al ratio was in the range of 0.2 to 0.3 in the examples by the invention. The SAR around 11 and CuO concentration of 4.1 wt-% resulted in a low molar Cu/Al (by zeolite Al) ratio of about 0.22, which gives a chance to have a good copper distribution on Al sites inside zeolite (CHA) structure.

The slurry composition itself and the corresponding preparation vary according to the examined materials. Examples 1 to 11 describe the corresponding catalyst compositions and details in preparation process. The substrates are coated on cordierite flow-through substrates by methods well known in the art of catalyst preparation. Coating was conducted in the presence of a blower and sucking unit to remove excess of water and other volatile compounds. The SCR catalysts in the invention were dried and calcined by standard methods in static air. A ramp increase in temperature is applied for catalyst calcination, to form slowly the final zeolite-metal oxide coating layer with a good adhesion, cohesion and to avoid cracking. Calcination is made in the presence of air or oxygen containing gases at higher temperatures (400 - 700°C) to reach the final stable states on the catalyst coating and to decompose the precursors. A calcination temperature around 550 - 650°C in air is preferred to form stable zeolite, metal oxide and Cu oxide states. That high temperature guarantees also the stable activity in use conditions.

In the examples, first Al-compound precursor was added under heavy stirring to deionized water. In this phase the Al₂O₃ source is dispersed forming tiny nanoparticles with small crystalline sizes and dispersed particles, in which process nitrates are enhancing the changes. In the second step, the Cu-containing Cu-CHA was mixed slowly to the mixture and mixing was continued for 2 to 4 hours. Zr and additive (La in examples) were added in the next step. The solid content in the resulting slurry was in the range of 25 - 39 %. Slurry was further milled with a batch ball and a continuous mill for 0.5 - 4 hours to reach target mean particles sizes (distribution), which are mainly originating from zeolite particles. The LP material is mixed into the slurry after milling but it is also possible to add LP during milling to decrease original particle size of LP particles and improve contacts between particles. The coating was added evenly by dip or dose coating in controlled ways by 1 - 3 coating rounds to reach the target coating amount. The wet coated substrate was dried in blowing air at 60°C and calcined before the possible next coating round. The coating amount was calculated by wet slurry basis (solid content known) and finally by the weight of calcined dry coating. The final calcination of samples was conducted at 600°C in air for 4 hours. The coating uniformity was confirmed by cutting the substrate to two pieces, which quality was checked.

Activity test conditions: The catalytic activity was investigated by synthetic gas bench (SGB) experiments. The samples were drilled out from a larger substrate (2.5 dm³ in examples) to a small activity test dimensions (diameter 14 mm, length 40 mm), matching inside the quartz tube reactor. The SCR feed gas composition in the SGB experiments were for NO only: 1000 ppm NH₃, 1000 ppm NO, 8% H₂O, 10% O₂, 82,8 % N₂. The gas composition for fast SCR measurement is containing promoting NO₂ (simulates the effect of DOC in SCR systems): 1000 ppm NH₃, 600 ppm NO, 400 ppm NO₂, 8% H₂O, 10% O₂, 82,8 % N₂. The space velocity (SV) was about 50.000 or 71.000 h⁻¹ in the experiments.

The hydrothermal (HT) ageing was conducted in the presence of air and 10% water at 800 and 850°C with the SV of 4000 h⁻¹ over a sample. The high ageing temperature has a target to evaluate the thermal durability of the Cu-CHA catalysts in the presence of water.

The invention is explained in detail by following examples, figures and schemes. The main catalyst parameters by the invention are shown in Figure 1.

The catalyst in the invention consists of substrate (100), which forms open flow channels (110) for exhaust gas and on which substrate walls the catalyst coating was located. The coating is formed by the mixture of Cu-zeolite (200, e.g. Cu-CHA), Al compound (300), ZrO₂ (400), additive (Add, 600) and large particles (LP, 500) and Ti and/or Si (700).

The catalyst compositions are summarized in Table 1.

**Table 1. Catalyst specifications. LP = Large particle component. SAR = Si/Al₂ mol/mol. Total SAR (TSAR, mol/mol) includes Al-compound but excluded Al in LP. Coated on 400 cpsi (cells per in²) cordierite substrate with 4 mils (101.6 µm) wall thickness.**

| Example | Code | SAR Si/Al₂ | TSAR Si/Al₂ | ZrO₂ wt-% | Add/La₂O₃ wt-% | CuO g/L | CuO wt-% | LP g/L | Ti, Si | Total coating g/L |
|---|---|---|---|---|---|---|---|---|---|---|
| 1a | Cu-CHA-11+Al-1 | 11 | 5.9 | 0 | 0 | 7 | 3.9 | 0 | no | 180 |
| 1b | Cu-CHA-11+A1-1 | 11 | 5.9 | 0 | 0 | 5 | 3.9 | 0 | no | 140 |
| 2 | Cu-CHA-11+Al-2 | 11 | 5.9 | 0 | 0 | 7 | 3.9 | 0 | no | 180 |
| 3 | Cu-CHA - High SAR REF | ∼28 | na | 0 | 0 | ∼5 | ∼3.0 | 0 | no | ∼180 |
| 4 | Cu-CHA-23+A1-1 REF | 23 | 8.6 | 0 | 0 | 6 | 3.3 | 0 | no | 180 |
| 5 | Cu-CHA-11+Al-1+6Zr | 11 | 5.9 | 6 | 0 | 5 | 3.9 | 0 | no | 140 |
| 6 | Cu-CHA-11+A1-1+3La | 11 | 5.9 | 0 | 3 | 5 | 3.9 | 0 | no | 140 |
| 7 | Cu-CHA-11+Al-1+3Zr-3La | 11 | 5.9 | 3 | 3 | 5 | 3.9 | 0 | no | 140 |
| 8a | Cu-CHA-11+Al-1+LP-AlLa | 11 | 5.9* | 0 | 0.6 3% in LP | 5 | 3.0 | 40 | no | 180 |
| 8b | Cu-CHA-11+Al-1+LP-AlSi | 11 | 5.9* | 0 | 0 | 5 | 3.0 | 40 | 20% SiO₂ in LP | 180 |
| 8c | Cu-CHA-11+Al-1+LP-AlSiZr | 11 | 5.9* | 3.3 15% in LP | 0 | 5 | 3.0 | 40 | 20% SiO₂ in LP | 180 |
| 9 | Cu-CHA-11+Al-3+6Zr+L P-AlLa | 11 | 5.9* | 6 | 0.6 3% in LP | 5 | 3.0 | 40 | no | 180 |
| 10 | Cu-CHA-11+Al-3+6Zr+L P-AlSiTi | 11 | 5.9* | 6 | 0 | 5 | 3.0 | 40 | 20% SiO₂ +20% TiO₂ in LP | 180 |
| 11 | Cu-CHA-11+Al-3+3Zr+3 La+LP-AlSiTi | 11 | 5.9* | 3 | 3 | 5 | 3.0 | 40 | 20% SiO₂ +20% TiO₂ in LP | 180 |

| | | | | | | | | | | |
|---|---|---|---|---|---|---|---|---|---|---|
| *excluding large particles, SAR and TSAR based on the molar ratio of Si/Al₂. Numbers in codes note compound concentration as oxide. g/L: grams per catalyst volume. wt-% in catalyst composition/coating, Al-compound measured as Al₂O₃ amount about 10% of zeolite + Al-compound in prepared compositions. CHA-11/23: CHA with SAR=11 or 23 (3.4 wt-% CuO). Add is the abbreviation for Additive. | | | | | | | | | | |

The atomic ratio Cu/Al was about 0.22 in zeolite (4.2 wt-% CuO) on the sample with CHA and SAR = 11 (#1a, #1b, #5-11). The Cu/Al molar ratio of reference Cu-CHA catalyst #3 was estimated to be about 0.7 by XRF analysis. The Cu/Al molar ratio of reference Cu-CHA catalyst #4 was estimated to be about 0.33 by composition.

### Example #1: Preparation of a Cu-zeolite catalyst with Al-1

Copper-exchanged chabazite (Cu-CHA, 4.1 wt-% copper in zeolite, resulting about in 7 g/L of catalyst volume, #1a) with a SAR of 11 (zeolite) and TSAR = 5.9 (whole catalyst) was dispersed together with nitrate modified Al-compound Al-1 into deionized water. The Al-1 had a crystallite size of 4.5 nm and a dispersed particle size of 20 nm (d₅₀). The amount of Al-compound was 10 wt-% as Al₂O₃ in final coating amount (180 g/L) as calcined. Another sample (#1b) with the same composition but a lower coating amount of 140 g/L was also prepared as a comparison to experiments with additional compounds.

### Example #2: Preparation of a Cu-zeolite catalyst with Al- 2

The same Cu-zeolite (CHA with SAR=11) as in the example 1 was coated also with another Al compound candidate having a crystal size of 9 nm dispersed particle size of 90 nm and this was a reference Al-2 (REF 1) with a larger Al₂O₃ crystal and dispersed particles sizes in water solution or slurry. The amount of Al-compound was 10 wt-% as Al₂O₃ in final coating amount as calcined.

### Example #3: State-of-art Cu-CHA catalyst as reference

A commercial reference Cu-CHA with SAR about 28 was examined as a reference (REF 2) representing the state-of-art Cu-CHA technology. The cell density was 400 cpsi with 4 mils and the coating amount about the same as in #1a.

### Example #4: Preparation of a Cu-zeolite catalyst with SAR = 23 as reference

A Cu-CHA zeolite with a SAR of 23 was used as reference (REF 3) to the samples with Cu-CHA with SAR = 11. That Cu-zeolite was coated with Al-compound Al-1. The amount of Al-1 was 10 wt-% as Al₂O₃ in final coating amount after calcination.

### Example #5: The use of zirconium as thermal stabilizer for Cu-CHA catalyst

6% ZrO₂ (#5) (after final calcination) was added as Zr nitrate into Cu-CHA-11 concept with Al-1 as Al-compound. The coating amount was after calcination 140 g/L.

### Example #6: The use of lanthanum as thermal stabilizer for Cu-CHA catalyst

3% La₂O₃ (#6) (after final calcination) was added as water soluble La nitrate into Cu-CHA-11 concept with Al-1 as Al-compound. The coating amount was after calcination 140 g/L.

### Example #7: The combination of zirconium and lanthanum as thermal stabilizers for Cu-CHA

3% La₂O₃ and 3% ZrO₂ (#7) (after final calcination) were added as the water soluble Zr and La nitrates into Cu-CHA concept with Al-1 as Al-compound. The coating amount was after calcination 140 g/L.

### Example #8a: The use of LP-AlLa in Cu-CHA catalyst

The same Cu-CHA zeolite as in the example 1 was prepared also together with Al-1 and 40 g/L LP, which composed alumina and lanthanum (additive on LP). Lanthanum stabilized Al₂O₃ as LP was added to the pre-milled slurry containing already Cu-zeolite and Al-1. The particle size (d₅₀) of this LP (noted as LP-AlLa) was 30 µm. The calcined catalyst material contained 70,0 % Cu-CHA, 7,8 % Al-1 as Al₂O₃ and 22,2 % LP-Al-La as oxide form. The total coating amount was after calcination 180 g/L.

### Example #8b: The use of LP-AISi particles in Cu-CHA catalyst

The same Cu-zeolite as in the example 1 was prepared also together with Al-1 and 40 g/L LP, Silica stabilized Al₂O₃ as LP was added to the pre-milled slurry containing already Cu-zeolite and Al-1. The particle size (d₅₀) of this LP (noted as LP-AISi) was 35 µm. The calcined catalyst material contained 70,0 % Cu-CHA, 7,8 % Al-1 as Al₂O₃ and 22,2 % LP-AlSi as oxide form. The total coating amount was after calcination 180 g/L.

### Example #8c: The use of LP-AlSiZr particles in Cu-CHA catalyst.

The same Cu-zeolite as in the example 1 was prepared also together with Al-1 and 40 g/L LP, which composed alumina, silica and zirconia. Silica and zirconia stabilized Al₂O₃ as LP was added into the pre-milled slurry containing already Cu-zeolite and Al-1. The particle size (d₅₀) of this LP (noted as LP-AlSiZr) was 35 µm. Thus, the original large particle size of LP was present in the final coating of #8a-c. The calcined catalyst material contained 70,0 % Cu-CHA, 7,8 % Al-1 as Al₂O₃ and 22,2 % LP-AlSiZr as oxide form. The total coating amount was after calcination 180 g/L.

### Example #9: The use of Al-3, Zr and LP-AlLa in Cu-CHA catalyst.

The same Cu-zeolite as in the example 1 was prepared together with Al-compound of Al-3, 6% ZrO₂ and 40 g/L LP, which composed of alumina and lanthanum (LP-AlLa, additive included LP). La stabilized Al₂O₃ as LP was added to the slurry containing already Cu-zeolite, Al-3 and 6% ZrO₂ calculated as calcined coating. Nitric acid treated, nanocrystalline Al-3 was an alternative Al-compound to Al-1 and it was applied in these combinatory compound studies with good coating process properties. Water soluble Zr(NO₃)₄ is the ZrO₂ source in this slurry . The particle size (d₅₀) of this LP (LP-AlLa) was 30 µm. The calcined catalyst material contained 70,0 % Cu-CHA, 7,8 % Al-3 as Al₂O₃, 3% ZrO₂ and 22,2 % LP-AlLa as oxide form. The total coating amount as coated on ceramic substrate was after calcination 180 g/L.

### Example #10: Addition of Al-3, Zr and LP-AlSiTi in Cu-CHA catalyst.

The same Cu-zeolite as in the example 1 was prepared with Al-3 together with 6% ZrO₂, 40 g/L LP (22.2 wt-% in final coating), which composed alumina, silica and titanium as stable oxides (LP-AlSiTi). Si-Ti stabilized Al₂O₃ as LP was added to the slurry containing already Cu-zeolite, Al-3 and 6% ZrO₂ as calculated as calcined coating. Nitric acid treated, nanocrystalline Al-3 was an alternative Al-compound to Al-1 and it was applied in these combinatory compound studies. The particle size (d₅₀) of this LP (LP-AlSiTi) was 30 µm. The calcined catalyst material contained 70,0 % Cu-CHA, 7,8 % Al-3 as Al₂O₃, 3% ZrO₂ and 22,2 % LP-AlSiTi as oxide form. The total coating amount as coated on ceramic substrate was after calcination 180 g/L.

### Example #11: Addition of Al-3, Zr, La and LP-AlSiTi in Cu-CHA catalyst.

In this example Cu-CHA with SAR=11 was prepared with Al-3 (Al-compound), 3% ZrO₂, 3% La₂O₃ and LP-AlSiTi, which composed alumina, silica and titanium as stable oxides. Nitric acid treated, nanocrystalline Al-3 applied in these combinatory compound studies. The particle size (d₅₀) of this LP (LP-AlSiTi) was 30 µm. The weight percent of the calcined material is 70,0 % Cu-CHA, 7,8 % Al-3 as Al₂O₃, 3% ZrO₂, 3% La₂O₃ and 22,2 % LP-AlSiTi as oxide form. The total coating amount as coated on ceramic substrate was after calcination 180 g/L.

The functionality of the Al-compound and the effect of the different additives as used in the examples 1 - 11 are explained in the following by the test results of the NOx conversion which are shown in figures 2 - 6.

Figure 2: Influence of Al-compound with a small crystalline size and a comparison with a reference state-of-art Cu-CHA catalyst in NO-NO₂ feed gas (40% NO₂, SV 71.000 h⁻¹) in SGB experiments as HT800/20 h aged.
NOₓ conversion in fast SCR was clearly higher with the Cu-CHA sample (example 1a) having SAR of 11, TSAR of 5.9 and Al-1 as Al-compound in comparison to the Cu-CHA with Al-2 (example 2, REF 1) with larger Al₂O₃ crystalline sizes. The state-of-art Cu-CHA (example 3, REF 2) showed a good low and medium temperature activity but also a sharp drop as HT800 aged at high temperatures above 400°C. This is related to excessive high ammonia oxidation, which results in a low conversion of 52% at 570°C in NO+NO₂ feed gas. The Cu/Al ratio was estimated to be about 0.7 on this high-SAR Cu-CHA, which is probably a reason to free Cu oxides on zeolite and for excessive high ammonia oxidation at high temperature This is a typical property of high-SAR Cu-CHA zeolites in SCR. The use of lower Cu/Al on Cu-CHA with high SAR will decrease the total CuO loading, which is harmful for important low and medium temperature SCR activity. Therefore, a stabilized Cu-CHA with low SAR according to the invention is a solution to keep good SCR functionality at low and high temperatures. The Cu-CHA with SAR=11 was also competitive to Cu-CHA (example 4, REF 3) with SAR=23 prepared with Al-1 additive. The Cu-CHA SCR (SAR=23, example 4) had however a higher SCR activity than the one of example 2 with larger Al₂O₃ crystals. Therefore, it was possible to prepare thermally stable Cu-CHA catalyst with a low SAR like 11 and be competitive to Cu-CHA with higher SAR (>20) by the promotion of nanocrystalline Al-compound.

Figure 3: Improved ageing stability of Cu-CHA with Al-1, zirconium and lanthanum as thermal stabilizers in NO only (Fig. 3a) and NO+NO₂ (Fig. 3b) feed gases (50.000 h⁻¹) in SGB experiments as HT850/20h aged.
It was further possible to improve the SCR activity on Cu-CHA catalyst with SAR of 11 and Al-1 by adding as dispersed forms 6% ZrO₂ (example 5) or 3% La₂O₃ (example 6). In these thermal stabilizer experiments the ageing temperature was increased up to 850°C to see the stabilization effects on zeolites. The reactor conditions were slightly changed in comparison to Fig. 2, resulting in SV of 50.000 h⁻¹ in this and later experiments. In addition, both NO only and NO+NO₂ was applied in feed gases to see the relative NO₂ promotion and dependency in SCR reactions. The improvement due to the added compounds was clear both in NO only and NO+NO₂ feed gases at low and medium temperatures up to 500°C, which temperature range covers the main use and engine mapping conditions in diesel applications.

Nanocrystalline Al-1 can be also applied with the combinations of 3% ZrO₂ and 3% La₂O₃ (example 7), resulting in improvements at low and high temperature. Therefore, it is possible to enhance the hydrothermal stability of Cu-CHA with low SAR like 11 with Al-1 as Al-compound together with Zr and La as additive.

Figure 4: Improved ageing stability of Cu-CHA with Al-1 together with Large Particles (LP) as promoters in NO only (Fig. 4a) and NO+NO₂ (Fig. 4b) feed gases (50.000 h⁻¹) in SGB experiments as HT850/20h aged.
The SCR activity of Cu-CHA with low SAR of 11 and Al-1 was further improved by adding LP composing Al₂O₃ as the main oxide but containing also the additives La (in example 8a), Si (in example 8b) or Zr+Si (in example 8c). The addition of LP on Cu-CHA-11 with Al-1 increased NOₓ conversions over the whole operation window. LP particles were stabilized preferably with Si or Ti to improve the thermal durability and to increase acidity. Si, Ti or Zr on alumina are also decreasing the sulfur adsorption on LP. The increasing acidity correlates to a lower sulfur adsorption tendency. In addition, Zr and/or additive can be also added on LP particles to improve the stability of LP against sintering. La is a thermal stabilizer but also decreasing acidity and creating basic sites on LP. A role of La is to decrease ammonia adsorption on LP particles in SCR reaction conditions and guide ammonia to adsorb on zeolitic sites near to active copper sites. Then the catalyst composition contains LPs as thermal barriers, which have a minimized ammonia adsorption capacity, which is thus concentrated in zeolite particles with SCR functionality.

Figure 5. Improved ageing stability of Cu-CHA with Al-3 as Al-compound, Zr, La as additive and LP with Si+Ti in NO only (Fig. 5a) and NO+NO₂ (Fig. 5b) feed gases (50.000 h⁻¹) in SGB experiments as HT850/20h aged.

The combinations of Al-3, Zr, La and LP was applied for the Cu-CHA with SAR=11 catalyst preparation. The stability of LP was promoted with Si+Ti and La (additive). The Cu-CHA amount was the same in all these samples. Therefore, the coating layer was also diluted with LP particles, which have also a preventing effect on sintering propagation in use conditions. The samples with 6% ZrO₂ (example 9 and example 10) showed a high SCR efficiency in NO only and NO+NO₂ feed gases both with LP including La or LP including Si+Ti. The same applies for the sample with 3% ZrO₂ and 3% La₂O₃ with LP including Si+Ti (example 11). The promoters of Zr, La and stabilized LPs in these catalysts improved the low temperature SCR activity. A particular improvement was seen in fast SCR (NO+NO₂), because NO₂ is usually compensating the poor reaction light-off detected in NO only feed. Therefore, LP containing Si and Ti improved the performance of LP in Cu-CHA catalyst. Ti and Si are able to stabilize alumina surface to reduce sulfur oxides' adsorption, which is important in lean exhaust gas applications.

Figure 6. The comparison of the Cu-CHA catalyst by the invention to high-SAR Cu-CHA by NO+NO₂ feed gases (50.000 h⁻¹) in SGB experiments as HT850/20h aged.

Finally, a developed Cu-zeolite composition containing Al-compound, 3% ZrO₂, 3% La₂O₃ as additive and alumina-based LP with Si+Ti promotion (example 11) was compared to the reference Cu-CHA catalyst (example 3, REF 2) with high SAR of about 28. The invented Cu-CHA composition showed higher NOₓ conversion over the whole temperature window and a much higher selectivity at higher temperatures above 400°C. Reference catalyst (REF 2) has a property of excessive high ammonia oxidation, which is harmful for urea consumption and overall NOₓ efficiency. A slight drop was also seen after HT850 ageing on example 11 according to this invention but NOₓ conversion was still about 90% at 500°C and about 80% at 600°C. Correspondingly, NOₓ conversion was about 80% at 500°C and about 49% at 600°C on REF 2 sample (example 3) after HT850 ageing. In the diesel exhaust gas conditions, a high SCR activity at least up to 500°C is necessary. The low temperature SCR activity was enhanced in the presence of NO₂ by the promotion by Zr, La and LP.

### Final summary and conclusions

The SCR activity results with heavily at 800 and 850°C hydrothermally aged Cu-zeolite catalysts proved the stabilization and promoting effects of claimed catalyst compositions. The use of low-SAR (< 15) Cu-zeolite (CHA) enables the use of high Cu loadings with a low molar Cu/Al ratio (<0.4) resulting in a low ammonia oxidation at high temperatures and a high NOₓ efficiency with varying NO₂/NOₓ ratios over the whole temperature window in lean exhaust gas conditions. Nanocrystalline Al-compound (Al₂O₃) improved the thermal stability with Cu-CHA zeolite with low SAR = 11. Two good examples were presented as Al-compound; Al-1 with a crystalline size of 4.5 nm and Al-3 with a crystalline size of 6 nm. Details in coating process play also a role which of the Al-compounds will be used in the combinatory compositions. Zirconium as a stable, dispersed zirconium oxide form showed additional improvements for thermal durability, acidity control and low temperature activity on Cu-zeolite SCR catalyst. Additive (La in examples) showed further stabilization and enhancements at low temperature functionality on Cu-zeolite SCR catalysts. Large particles (LP) with Si and Ti as promoters showed clear improvements in Cu-zeolite catalyst stability. LP have also a key role in the structural and thermal durability of coating layer. The examples showed several variations about the combinations of the promoting compounds. The parameter total SAR (TSAR) was defined which varies for Cu-zeolite SCR catalysts with the amount of nanocrystalline aluminum oxide. The ionic radius of added compounds was also defined by the interaction possibilities. Cu²⁺ inside zeolitic cage has a key radius, Al-compound with Al³⁺ has a smaller radius, Zr⁴⁺ and additive ions a larger radius and Ti⁴⁺/Si⁴⁺ a smaller radius than Cu²⁺. In addition, Si and Ti have near to the same radius as Al ions in the main stable ionic states.

The same promoting effect can be applied also for other zeolite catalysts with low SAR (<20, even lower like <15). AEI, AFX, LEV or Beta microporous zeolite structures can be used instead of CHA as the microporous zeolite carrying at least copper or iron as the active metal.

## Claims

1. A catalyst composition for selective catalytic reduction of NOₓ by ammonia or compounds generating ammonia under exhaust gas conditions, the composition comprising
a) a copper ion exchanged zeolite particle having a Si/Al₂ molar ratio (SAR) of 15 or less and a copper ion content sufficiently high to perform the catalytic reduction,
b) a nanocrystalline aluminium compound in an amount sufficient for stabilizing the zeolite by reducing the dealumination rate from the zeolite, and
c) a zirconium compound in an amount sufficient to improve hydrothermal durability of the catalyst composition.

2. The catalyst composition of claim 1 wherein the zeolite is selected from a framework group consisting of chabazite (CHA), AEI, AFX, LEV, Beta or mixtures thereof.

3. The catalyst composition of claim 1 or 2 having a SAR from 2 - 14.9, such as 5 - 14.9.

4. The catalyst composition of any one of claims 1-3 wherein the copper ion content, measured as CuO, in the zeolite is from 1-10 wt%, such as 2-7 wt%, preferably 4-5 wt%, based on the total zeolite weight.

5. The catalyst composition of any one of claims 1-4 wherein the molar ratio of Cu/Al in the zeolite is from 0.02 to 0.4, preferable from 0.05 to 0.25.

6. The catalyst composition of any one of claims 1-5 wherein the total copper ion content measured as CuO in the catalyst composition is from 2-6 wt% based on total weight of the catalyst composition.

7. The catalyst composition of any one of claims 1-6 wherein the copper ion exchanged zeolite particles comprises a size as d₅₀ from 1-10 micron, such as from 2-5 micron.

8. The catalyst composition of any one of claims 1-7 wherein the zirconium compound comprises zirconium oxides.

9. The catalyst composition of any one of claims 1-8 wherein the content of the zirconium compound in the catalyst composition is as ZrO₂ from 1 to 10 wt%, such as from 2-7 wt% based on total weight of the catalyst composition.

10. The catalyst composition of any one of the preceding claims wherein the nanocrystalline aluminium compound is aluminium oxide, such as Al₂O₃.

11. The catalyst composition of any one of the preceding claims wherein the nanocrystalline Al₂O₃ comprises a crystalline size as d₅₀ from 1 - 8 nm, such as 3 - 7 nm.

12. The catalyst composition of any one of the preceding claims wherein the nanocrystalline Al₂O₃ comprises a dispersed particle size as d₅₀ from 5-80 nm, such as 10-65 nm.

13. The catalyst composition of any one of the preceding claims comprising large particle (LP), such as Al₂O₃ based large particles, comprising a particle size by d₅₀ from 3 - 200 micron, preferably from 5 - 40 micron.

14. The catalyst composition of any one of the preceding claims comprising an additive selected from oxides of La, Y, Hf, Nd, and mixtures thereof.

15. The catalyst composition of any one of the preceding claims comprising Si, Ti and mixtures thereof as a form of stable oxides.

16. The catalyst composition of claim 15 wherein the Si and/or Ti is attached to the large particle (LP).

17. The catalyst composition of any one of the preceding claims having a total SAR (TSAR) of less than 10, wherein TSAR is defined as the molar Si/Al₂ ratio between Si in the zeolite and total Al₂ in the zeolite and nanocrystalline aluminium compound.

18. The catalyst composition of any one of the preceding claims having a TSAR from 4 - 10, such as 4 -8, e.g. 5 - 7.

19. A support structure for use in an exhaust gas system comprising a catalyst composition of any one of the preceding claims.

20. The support structure of claim 19 selected from a ceramic or metallic flow-through and wall-flow substrate, preferably a flow-through substrate.

21. Use of a catalyst composition of any one of claims 1-18 for selective catalytic reduction of NOₓ by ammonia or compounds generating ammonia under exhaust gas conditions.

22. An exhaust gas treatment system comprising a catalyst composition of any one of claims 1-18 for selective catalytic reduction of NOₓ by ammonia or compounds, such as urea, generating ammonia under exhaust gas conditions coated on a support structure.

23. A method for the selective catalytic reduction of NOₓ by ammonia or compounds forming ammonia in exhaust gas conditions, the method comprising applying the catalyst composition of any one of claims 1-18 on a support structure.

24. A catalyst composition for selective catalytic reduction of NOₓ by ammonia or compounds generating ammonia under exhaust gas conditions, of claim 1-18 obtainable by drying and calcining an aqueous catalyst composition comprising a) a copper ion exchanged zeolite particle having a Si/Al₂ molar ratio (SAR) of 15 or less and a copper ion content sufficiently high to perform the catalytic reduction, b) a nanocrystalline aluminium compound in an amount sufficient for stabilizing the zeolite by reducing the dealumination rate from the zeolite, and
c) a zirconium compound in an amount sufficient to improve hydrothermal durability of the catalyst composition; at a temperature form 400-700 °C in the presence of oxygen, such as air.

25. The catalyst composition of claim 24 wherein the zirconium compound is selected from a precursor of zirconium compound, such as zirconium oxides, zirconium sulphoxides, zirconium sulphates, zirconium nitrates, zirconium acetates, zirconium hydroxides and mixtures hereof.

26. The catalyst composition of claim 24 or 25 wherein the nanocrystalline aluminium compound comprises an acidic surface.
